Europäisches Patentamt

European Patent Office

Office européen des brevets

(11) Veröffentlichungsnummer: **0 179 236**
A2

## (12) EUROPÄISCHE PATENTANMELDUNG

(21) Anmeldenummer: **85110999.1**

(22) Anmeldetag: **31.08.85**

(51) Int. Cl.⁴: **B 01 D 13/00**

(30) Priorität: **25.10.84 DE 3439079**

(43) Veröffentlichungstag der Anmeldung:
**30.04.86 Patentblatt 86/18**

(84) Benannte Vertragsstaaten:
**AT BE CH DE FR GB IT LI LU NL SE**

(71) Anmelder: **Akzo GmbH**
**Postfach 10 01 49 Kasinostrasse 19-23**
**D-5600 Wuppertal-1(DE)**

(72) Erfinder: **Ostertag, Karl, Dr., Dipl.-Ing.**
**Dr. Jordan-Strasse 2**
**D-8765 Erlenbach(DE)**

(54) Verfahren zum Überführen von Metallionen unter Verwendung mikroporöser Membranen.

(57) Es wird ein Verfahren zur Überführung von Metallionen aus einer wäßrigen Flüssigkeit in eine nichtwäßrige, mit Wasser nicht mischbare Flüssigkeit und von dort in eine weitere wäßrige Flüssigkeit beschrieben. Die nichtwäßrige Flüssigkeit enthält einen oder mehrere Komplexbildner und wird von der Metallionen abgebenden wäßrigen Flüssigkeit durch eine oder mehrere mikroporöse hydrophobe Membranen getrennt gehalten. In den Poren dieser Membranen befindet sich ein Teil der Gesamtmenge der nichtwäßrigen Flüssigkeit. Die Hauptmenge dieser Flüssigkeit wird im Kreislauf durch zwei oder mehr Überführungszonen geführt. Die Abgabe der Metallionen an die zweite wäßrige Flüssigkeit erfolgt durch mechanisches Vermischen der nichtwäßrigen mit der zweiten wäßrigen Flüssigkeit. Aus dem Gemisch wird wäßrige Phase durch einen mittels Membranen durchgeführten Trennprozeß wieder abgetrennt.

Durch das kontinuierliche Verfahren lassen sich hohe Flußwerte für die Metallionen erzielen. Aufwendige Trenn- und Reinigungsprozesse werden vermieden.

Das Verfahren ist für Prozesse des gekoppelten Co- und Counter-Transports von Metallionen gut geeignet und läßt sich u.a. vorteilhaft bei der Erzaufbereitung und Abwasserreinigung anwenden.

EP 0 179 236 A2

Croydon Printing Company Ltd.

Verfahren, bei denen Metallionen aus einer wäßrigen Lösung
zu entfernen sind, finden beispielsweise Anwendung in der
Erzaufbereitung. Hierbei ist es vielfach erwünscht, selektiv Ionen einer bestimmten Art aus einer wäßrigen Flüssigkeit zu überführen und daraus das Metall in reiner Form
zu gewinnen. Ein anderes Einsatzgebiet für derartige Verfahren ist die Abwasserreinigung, wo Metallionen bis auf
geringe Spuren aus wäßrigen Flüssigkeiten zu entfernen
sind.

Verfahren zur Überführung von Metallionen aus einer wäßrigen Lösung in eine andere unter Zwischenschaltung einer
Komplexierung sind bekannt. So beschreibt die DE-OS
29 10 793 ein Verfahren, bei dem eine organische Flüssigkeit, welche einen Komplexbildner enthält, sich in den
Poren einer Membran befindet. Jeweils eine Oberfläche der
Membran steht in Kontakt mit der wäßrigen Flüssigkeit,
welche Metallionen abgibt und der, welche sie aufnimmt.
Das Überführen der Metallionen erfolgt somit durch
Komplexierung an einer Membranoberfläche, Diffusion der
Komplexe durch das Porensystem und Freisetzung der Ionen
an der anderen Membranoberfläche. Der Nachteil von Verfahren dieser Art besteht darin, daß der Komplexbildner
aus dem Porensystem austreten und in die wäßrigen Flüssigkeiten eindringen kann. Dies kann hervorgerufen werden
durch eine gewisse Löslichkeit des Komplexbildners in
Wasser oder durch Druckschwankungen oder durch Turbulenzen
in den wäßrigen Flüssigkeiten an den Membranoberflächen.
Diese Verluste an Komplexbildner führen anfangs zu einer
Verlangsamung des Prozesses, also zu einer Abnahme des
Metallionenflusses und schließlich zum Stillstand des
Verfahrens. Vor Wiederverwendung müssen die Membranen ge-

0179236

reinigt und neu gefüllt werden.

Das o.a. Problem wird in anderen Verfahren dadurch umgangen, daß nicht ein stationär in Membranporen vorliegender Komplexbildner verwendet wird. Vielmehr wird die organische Flüssigkeit, welche den Komplexbildner enthält, von einer ersten Überführungszone zu einer zweiten geführt. In der ersten Überführungszone erfolgt die Aufnahme der Metallionen aus einer wäßrigen Flüssigkeit durch den Komplexbildner, in der zweiten deren Abgabe an eine andere wäßrige Flüssigkeit. Verfahren dieser Art, die nach dem Prinzip von Extraktion und Trennung flüssiger Systeme mittels Abscheiden arbeiten, sind in Chemical Engineering 1970, Seite 82 ff und in der US-PS 3 939 203 beschrieben. Diese Verfahren weisen ebenfalls Nachteile auf. So können aus der Metallionen abgebenden wäßrigen Flüssigkeit unerwünschte Beimengungen in die organische Flüssigkeit gelangen, während die beiden intensiv gemischt werden. Diese Beimengungen müssen dann vor einer Rückgewinnung der reinen Metalle durch Reinigungsoperationen entfernt werden. Ein weiterer Nachteil besteht darin, daß beim Vermischen der wäßrigen Flüssigkeit mit der organischen sich die Metallionen, dem Verteilungsgesetz bzw. dem chemischen Gleichgewicht folgend, auf die beiden Flüssigkeiten verteilen, so daß mehrere Misch- und Trennstufen erforderlich sind, um hohe Ausbeuten an Metall zu erzielen. Setzt man diese Verfahren zur Abwasserreinigung ein, kommt im Normalfall ein weiterer Nachteil hinzu: Da Abwässer häufig Tenside enthalten, kann eine Emulgierung der organischen Flüssigkeit oder eines Teils davon stattfinden, wodurch deren Abtrennung von der wäßrigen Phase erschwert wird.

Verfahren, bei denen sowohl die Metallionen abgebende
als auch die Metallionen aufnehmende wäßrige Flüssigkeit
jeweils mit der organischen Phase gemischt und dann auf
übliche Art, z.B. durch Abscheiden, wieder von ihr getrennt
werden, erfordern also häufig eine Reihe von sich wiederholenden Schritten und sind daher aufwendig.

Der Entwicklung des erfindungsgemäßen Verfahrens lag somit
die Aufgabe zugrunde, ein Verfahren zu schaffen, welches
die erwähnten Nachteile nicht aufweist, welches inbesondere eine wirtschaftlichere Alternative zu bekannten
Verfahren darstellt.

Die Lösung der Aufgabe besteht erfindungsgemäß darin, daß
man die nichtwäßrige Flüssigkeit (B), welche den oder die
Komplexbildner enthält, kontinuierlich im Kreislauf durch
die Überführungszonen führt, wobei die Metallionen abgebende
wäßrige Flüssigkeit (A) von der im Kreislauf geführten Flüssigkeit B durch eine oder mehrere mikroporöse hydrophobe
Membranen getrennt gehalten wird, in deren Poren sich ein
Teil der Flüssigkeit B befindet und daß in der zweiten Überführungszone die Flüssigkeit B mit der Metallionen aufnehmenden wäßrigen Flüssigkeit (Z) mechanisch vermischt wird und daß
aus diesem Gemisch in der zweiten Überführungszone durch einen
mittels Membranen durchgeführten Trennprozeß wäßrige Phase
wieder abgetrennt wird.

Das Abtrennen wäßriger Phase aus dem Gemisch kann, wie unten
näher erläutert, je nach der gewählten Membran, erfolgen, indem man entweder wäßrige Phase (Z) durch die Membran permeieren
läßt oder aber nichtwäßrige Phase (B).

Es wurde festgestellt, daß bei diesem Verfahren ein höherer
Fluß an Metallionen, das ist die Menge der pro Zeiteinheit
von B nach Z überführten Metallionen, resultiert als bei Verfahren, bei denen ohne direktes Vermischen der Flüssigkeiten B
und Z gearbeitet wird, z.B. Verfahren, bei denen der Übergang
der Metallionen von B nach Z mittels Diffusion durch eine
Membran erfolgt. Die Erklärung hierfür wird in der wesentlich
vergrößerten Grenzfläche zwischen B und Z gesehen, die sich
durch innige mechanische Vermischung dieser Flüssigkeiten
erzielen läßt. Mechanische Vermischung dieser im ruhenden
Zustand nicht mischbaren Flüssigkeiten ist also zur Erzielung
eines erhöhten Metallionenflusses erforderlich. Anschließend
an das mechanische Vermischen muß sich ein Trennprozeß anschließen, durch den wäßrige Phase aus dem Gemisch abgetrennt
wird und der nunmehr mit Metallionen angereicherte Flüssigkeit Z liefert. Dieser Trennprozeß wird beim erfindungsgemäßen Verfahren mittels Membranen durchgeführt.


Das Verfahren läßt sich in vorteilhafter Weise bei der Erzaufbereitung sowie bei der Abwasserreinigung anwenden. Es
eignet sich sowohl für einen gekoppelten Co-Transport von
Metallkationen wie auch für einen gekoppelten Counter-Transport.
Beim gekoppelten Co-Transport werden Anionen gleichzeitig und
gleichsinnig mit den Kationen überführt. Beim Counter-Transport erfolgt die erforderliche Aufrechterhaltung der elektrischen Neutralität in den wäßrigen Flüssigkeiten dadurch,
daß man Kationen einer anderen Art in Gegenrichtung zu den
Metallkationen überführt. Das Verfahren eignet sich in modifizierter Form auch für die Überführung von metallhaltigen
Anionen.

Das Verfahren wird nunmehr im einzelnen beschrieben.

In einer ersten Überführungszone befindet sich die wäßrige Flüssigkeit A, welche die zu überführenden Metallionen enthält, in Kontakt mit jeweils einer der Oberflächen einer oder mehrerer mikroporöser hydrophober Membranen. An der jeweils anderen Oberfläche der Membran bzw. Membranen wird eine nichtwäßrige Flüssigkeit B vorbeigeführt, entweder in reiner Form oder als Gemisch mit einem Teil einer wäßrigen Flüssigkeit Z, wie unten näher beschrieben wird. Die Flüssigkeit B ist in der Regel eine unpolare oder wenig polare organische Flüssigkeit und enthält mindestens einen Komplexbildner für die Metallionen. Sollen mehrere Arten von Metallionen gleichzeitig überführt werden, kann B auch mehrere Komplexbildner enthalten. Ein Teil der Gesamtmenge der Flüssigkeit B befindet sich in den Poren der Membran. Die Überführung der Metallionen aus der Flüssigkeit A in die Flüssigkeit B erfolgt somit an der A zugekehrten Membranoberfläche.

Auf Grund von Konzentrationsgradienten und des Komplexbildungsgleichgewichts werden die Metallionen komplex gebunden und in die Flüssigkeit B überführt. Die Komplexe diffundieren durch die in den Poren vorliegende Flüssigkeit B wiederum auf Grund von Konzentrationsgradienten. Damit diese Diffusion mit einer akzeptablen Geschwindigkeit abläuft, muß B ein Lösungsmittel für die komplexierten Metallionen darstellen. An der anderen Membranoberfläche werden die Komplexe von dem im Kreislauf geführten Anteil der Flüssigkeit B mitgenommen und zu einer zweiten Überführungszone geführt. Bei der Ausführungsform, in welcher die reine Flüssigkeit B verwendet wird, um Metallionen aus
A aufzunehmen, werden in dieser zweiten Zone die Metallionen aus ihren Komplexen freigesetzt und an eine wäßrige
Flüssigkeit Z abgegeben. Wenn ein Gemisch aus B und Z
in der ersten Überführungszone vorliegt, findet der Übergang der Metallionen von B nach Z mindestens teilweise
bereits vor dem Eintritt des Gemisches in die zweite Überführungszone statt. Auf eine Verwendung von Membranen, welche
in der ersten Überführungszone unerläßlich ist, wird in der
zweiten verzichtet. Dies ist deshalb möglich, weil die
Flüssigkeit B keine unerwünschten Beimengungen enthält.
Die Flüssigkeit A dagegen kann solche enthalten, entweder
in gelöster oder in dispergierter Form. In A dispergierte
Beimengungen gelangen wegen ihrer Teilchengrößen bzw. ihrer
Polarität nicht in die in den Mikroporen der Membran vorliegende Flüssigkeit B. In der Flüssigkeit A gelöste Beimengungen dringen wegen ihrer Polarität nicht in die Poren
der hydrophoben Membran und in die unpolare Flüssigkeit B
ein.

Nachdem die Flüssigkeit B bzw. das Gemisch aus B und Z
die zweite Überführungszone verlassen hat, kann sie wieder
direkt in die erste zurückgeführt werden, um erneut Metallionen
aufzunehmen. Es können sich aber im Kreislauf von B weitere Überführungszonen befinden, deren Anzahl eine gerade Zahl ist. Auf diese Weise kann die Flüssigkeit B bzw. das Gemisch der
Flüssigkeiten B und Z abwechselnd in einer Zone
Metallionen aus der Flüssigkeit A aufnehmen und in der
darauffolgenden an die Flüssigkeit Z abgeben und umgekehrt.
Eine bevorzugte Ausführungsform des Verfahrens ist somit
dadurch gekennzeichnet, daß man die Flüssigkeit B im Kreislauf durch mehr als zwei Überführungszonen führt, wobei
deren Gesamtzahl eine gerade Zahl ist und wobei B abwechselnd
in einer Überführungszone Metallionen aus der Flüssigkeit A
aufnimmt und in der darauffolgenden an die Flüssigkeit Z
abgibt und umgekehrt. Auch in dieser Ausführungsform wird
B mit Z vermischt, und anschließend wird aus dem Gemisch
mittels eines Membrantrennprozesses wäßrige Phase abgetrennt. Der hierdurch erzielbare Vorteil, nämlich eine
erhöhte Menge an in der Zeiteinheit überführten Metallionen, läßt sich prinzipiell bis zu einem gewissen Ausmaß
zwar auch bei Verwendung von nur zwei Überführungszonen
erzielen, z.B. durch größere Dimensionierung oder Verwendung einer größeren Anzahl von Hohlfadenmembranen,durch
welche die Flüssigkeit A von der Flüssigkeit B getrennt
gehalten wird. Die Verwendung von mehr als zwei Überführungszonen bietet jedoch demgegenüber den Vorteil, daß
handelsübliche Vorrichtungen verwendet werden können,
während bei größeren Dimensionierungen Spezialanfertigungen
nötig werden können. Darüber hinaus ist eine größere
Dimensionierung über Vergrößerung der Länge der Membranen
nur bis zu einem gewissen Grad sinnvoll, wenn nicht einer
der Vorteile des Verfahrens abgeschwächt werden soll.
Dieser Vorteil besteht in hohen Konzentrationsgradienten
der Metallionen zwischen den Flüssigkeiten A und B, da B
niedrig mit Metallionen beladen in die erste Überführungszone eintritt und sich erst längs der Membran mit Metall-

A3047/9236

ionen anreichert. Bei großer Dimensionierung der Vorrichtung kann gegebenenfalls eine sehr starke Anreicherung der Flüssigkeit B mit Metallionen stattfinden, und es können daher die Flußwerte, d.h. die Menge an pro Zeiteinheit von A nach B überführter Metallionen, infolge sinkender Konzentrationsgradienten niedriger liegen als bei Verwendung von mehr als zwei Austauschvorrichtungen kleinerer Dimensionen. In letzterem Fall gibt nämlich die Flüssigkeit B die Metallionen an die Flüssigkeit Z ab, bevor sie erneut beladen wird. Bei Verwendung von mehr als zwei Überführungszonen kann jede zweite von einem gemeinsamen Reservoir der Flüssigkeit A gespeist werden. Die Flüssigkeit A wird in den entsprechenden Überführungszonen jeweils durch mikroporöse hydrophobe Membranen von B getrennt gehalten.

Neben der oben beschriebenen Ausführungsform, bei der die Flüssigkeit B abwechselnd Metallionen aus der Flüssigkeit A aufnimmt und an die Flüssigkeit Z abgibt, ist jedoch auch eine Serienschaltung von Überführungszonen möglich. Diese Ausführungsform besteht beispielsweise darin, daß die Flüssigkeit B in mehreren hintereinandergeschalteten Überführungszonen jeweils Metallionen aus einer Flüssigkeit A aufnimmt, bevor sie die Metallionen an eine Flüssigkeit Z abgibt.

Um hohe Konzentrationsgradienten zwischen den Flüssigkeiten A und B zu erreichen, besteht eine bevorzugte Ausführungsform darin, daß die Flüssigkeit A im Kreislauf geführt wird, wobei sie in Gegenrichtung zur Strömungsrichtung der Flüssigkeit B an den Membranoberflächen geführt wird. Die Flüssigkeit A kann aber auch stationär vorliegen.

Um in der Flüssigkeit A die elektrische Neutralität aufrecht zu erhalten, können z.B. Anionen gleichzeitig und gleichsinnig mit den Metallkationen überführt werden. Diese Variante stellt den sogenannten gekoppelten Co-Transport dar. Geeignet für diese Variante sind z.B. Kronenäther, wie sie in Journal of Membrane Science 9 (1981) Seiten 83 ff beschrieben werden, da Kronenäther auch Anionen mitführen können. Kronenäther sind cyclische Verbindungen, die im Ring nur Kohlenstoff- und Sauerstoffatome aufweisen, wobei im Ring Ätherbindungen vorliegen und wobei zwischen je zwei Sauerstoffatomen im Ring mindestens zwei Kohlenstoffatome vorhanden sind. Die Kronenäther eignen sich jedoch auch für das unten beschriebene Verfahren des gekoppelten Counter-Transports. Ihre Verwendung stellt eine bevorzugte Ausführungsform des Verfahrens dar. Neben den unsubstituierten Kronenäthern sind auch Derivate der Kronenäther wie Substituenten tragende Kronenäther geeignet.

Besonders bevorzugt ist es, die elektrische Neutralität in den wäßrigen Flüssigkeiten dadurch aufrecht zu erhalten, daß man einen sogenannten gekoppelten Counter-Transport durchführt, bei dem Kationen X, die mit den Metallionen nicht identisch sind, in Gegenrichtung überführt werden. Zum einen bietet dieses Verfahren den Vorteil, daß auch Komplexbildner verwendet werden können, welche zum Transport von Anionen ungeeignet, aber z.B. wegen ihrer Selektivität für manche Metallionen erwünscht sind. Besonders geeignete Komplexbildner dieser Art sind chelatbildende Hydroxyoxime, wie sie in Journal of Membrane Science 2 (1977) Seiten 213 ff beschrieben sind. Eine bevorzugte Ausführungsform des Verfahrens besteht also darin, daß man bei der Verfahrensvariante des gekoppelten Counter-Transports chelatbildende Hydroxyoxime als Komplexbildner verwendet. Andere geeignete Komplexbildner sind organische Phosphorsäurederivate wie z.B. Phosphorsäure-di-(2-äthylhexyl)-ester und organische Phosphinoxide, z.B. Trioctylphosphinoxid, sowie Amine, z.B. Trioctylamin.

Gekoppelte Counter-Transportverfahren besitzen den großen
Vorteil, daß Metallionen gegen ihren Konzentrationsgradienten
überführt werden können. Dies bedeutet, daß ein Überführen
von Metallionen aus der Flüssigkeit A über die Flüssigkeit
B in die Flüssigkeit Z möglich ist, selbst wenn die Konzentration der Metallionen in Z bereits größer ist als in A.
Dies wird ermöglicht, wenn der Konzentrationsgradient der
Kationen X noch größer ist und die Triebkraft liefert.
Das Verfahren läuft dann so lange ab, wie $\dfrac{X_Z}{X_A}$ größer ist

als $\dfrac{M_Z}{M_A} \cdot \dfrac{n_M}{n_X}$. Hierbei bedeuten $X_A$ und $X_Z$ die Konzentrationen der Kationen X in den Flüssigkeiten A bzw. Z, $M_A$ und $M_Z$ die
entsprechenden Konzentrationen der Metallionen und $n_M$ und $n_X$
die Wertigkeiten der Metallionen bzw. der Kationen X. Bevorzugt verwendet man Wasserstoffionen als Kationen X. Die o.a.
Bedingung bedeutet dann, daß die Flüssigkeit Z stärker sauer
sein muß als die Flüssigkeit A. In der Regel liegt der
pH-Wert von Z bei 0,5 bis 1,5, der von A bei 2,5 bis 6.
Um die o.a. Bedingung über längere Zeit aufrechtzuerhalten,
empfiehlt es sich, in der Flüssigkeit A durch Neutralisieren
der übergeführten Wasserstoffionen einen weitgehend konstanten pH-Wert beizubehalten, was z.B. durch Zugabe eines
Puffers geschehen kann.

Eine bevorzugte Ausführungsform des Verfahrens ist somit
dadurch gekennzeichnet, daß gekoppelt mit dem Überführen
der Metallionen ein Überführen von Kationen X, die mit den
Metallionen nicht identisch sind, in Gegenrichtung zur
Überführung der Metallionen durchgeführt wird, wobei die Kationen X in der Flüssigkeit B ebenfalls in Form von gelösten Komplexen vorliegen. Die Kationen X müssen hierbei in der Flüssigkeit B deshalb als gelöste Komplexe vorliegen, damit sie schnell aus der Flüssigkeit Z in die Flüssigkeit A überführt werden können. Der bzw. die in der Flüssigkeit B vorhandene(n) Komplexbildner muß bzw. müssen also auch die Kationen X komplexieren, und B muß ein Lösungsmittel für die komplexierten Kationen X darstellen.

Für den Fall des gekoppelten Counter-Transports ist es weiterhin bevorzugt, daß die Konzentration $(X_Z)$ von X in Z größer ist als die Konzentration $(X_A)$ von X in A und daß $\dfrac{X_Z}{X_A}$ mindestens zu Beginn des Verfahrens größer ist als

$\dfrac{M_Z}{M_A} \cdot \dfrac{n_M}{n_X}$ , wobei $M_A$ und $M_Z$ die Konzentration der Metallionen in den Flüssigkeiten A bzw. Z und wobei $n_M$ und $n_X$ die Wertigkeiten der Metallionen bzw. der Kationen X bedeuten.

Ferner besteht eine bevorzugte Variante darin, daß $M_Z$ größer ist als $M_A$.

Weiter bevorzugte Ausführungsformen bestehen darin, daß die Kationen X Wasserstoffionen sind und für diesen Fall darin, daß in der Flüssigkeit A durch Neutralisieren der übergeführten Wasserstoffionen ein weitgehend konstanter pH-Wert aufrechterhalten wird.

Für das Verfahren werden mikroporöse hydrophobe Membranen verwendet, um die Flüssigkeit A von der Flüssigkeit B getrennt zu halten.

Unter mikroporösen Membranen werden hierbei Membranen verstanden, welche mittlere Porendurchmesser etwa im Bereich
von 0,05 µm bis 10 µm aufweisen. Entscheidend für ihre
Eignung für ein bestimmtes Verfahren ist hierbei jeweils
der Durchmesser an der engsten Stelle, welche ein Teilchen
passieren muß, das von einer Membranoberfläche an die
andere gelangen soll.

Um die Flüssigkeit A von der Flüssigkeit B getrennt zu
halten, sind aus der Gruppe der mikroporösen Membranen
solche besonders geeignet und daher bevorzugt, welche
ein sogenanntes verzelltes Porensystem aufweisen. Im Innern
der Membran sind hier neben den Poren annähernd kugelförmige
Zellen vorhanden, welche durch Verbindungsporen miteinander
verbunden sind. Die Zellen können dabei mittlere Durchmesser
von etwa 0,5 µm bis etwa 100 µm besitzen. Die Verbindungskanäle, welche die Poren darstellen, bestimmen, ob ein bestimmtes Teilchen noch durch die Membran hindurch gelangen
kann und weisen in der Regel mittlere Durchmesser von etwa
0,05 bis 10 µm auf. Membranen dieser Struktur sind deshalb
für das Verfahren besonders geeignet, weil sie die überwiegende Zahl der sich anbietenden Komplexbildner in das
Porensystem aufnehmen können, nicht aber in der Flüssigkeit
A dispergierte Verunreinigungen größerer Teilchenaggregationen.

Geeignete Porenstrukturen solcher Membranen sind u.a.
in der DE-OS 27 37 745 beschrieben. Die entsprechenden
Ausführungen dieser Schrift werden zum Inhalt der hier
vorliegenden Anmeldung gemacht.

Bei diesen Membranstrukturen lassen sich, begründet u.a.
durch das Vorhandensein der Zellen, große Porenvolumina
einstellen, d.h. Porenvolumina von 65 - 85% des Gesamtvolumens der Membran. Größere Porenvolumina, das sind die
Volumina der Zellen und der Verbindungsporen zusammengenommen, ermöglichen es, eine größere Menge der Flüssigkeit
B im Porensystem unterzubringen und führen damit zu einer
größeren Menge an Metallionen, welche in der Zeiteinheit
durch die Membran diffundieren können. In einer bevorzugten
Ausführungsform des Verfahrens beträgt deshalb das Porenvolumen der Membranen 65 - 85 % ihres Gesamtvolumens. In
einer weiteren bevorzugten Ausführungsform beträgt das
Porenvolumen 70-80% des Gesamtvolumens.

Die Wandstärke der Membranen, durch welche die Flüssigkeit A
von der Flüssigkeit B getrennt gehalten wird, kann, was
die Durchführbarkeit des Verfahrens betrifft, nahezu beliebig gewählt werden, lediglich nach unten existieren
Grenzwerte, bedingt durch die Stabilitätsanforderungen an
die Membran. Da die verwendeten Flüssigkeiten gewisse Drucke
auf die Membran ausüben, können bei großen Porenvolumina
Stabilitätsgründe eine untere Grenze für die Wandstärke
festlegen. Da andererseits größere Wandstärken zu längeren
Diffusionswegen für die Metallionenkomplexe führen, ist es
zweckmäßig, nicht zu große Wandstärken zu verwenden. In
einer bevorzugten Ausführungsform des Verfahrens beträgt
daher die Wandstärke der Membranen etwa 50 μm bis etwa
400 μm. In einer weiteren bevorzugten Ausführungsform beträgt die Wandstärke etwa 50 μm bis 300 μm.

Die Membranen, durch welche A von B getrennt gehalten wird, sind hydrophob. Darunter ist zu verstehen, daß die innere Oberfläche der Membranen, welche durch die Oberflächen der Poren bzw. der Zellen und der Verbindungsporen gebildet wird, hydrophob sein muß. Dies läßt sich entweder dadurch erzielen, daß man für die gesamte Membran ein hydrophobes Material verwendet, oder indem man Membranen verwendet, deren innere Oberfläche hydrophobiert ist. Dies kann z.B. bei Vorliegen einer hydrophobierenden Beschichtung der Fall sein. Durch die Hydrophobie wird einerseits gewährleistet, daß die unpolare oder sehr wenig polare, mit Wasser nicht oder nicht nennenswert mischbare Flüssigkeit B leicht in die Membranporen eindringt, da hydrophobe Membranen durch unpolare Flüssigkeiten gut benetzt werden. Andererseits verhindert die Hydrophobie des Membranmaterials das Eindringen von Wasser bzw. der Flüssigkeit A, da wäßrige Flüssigkeiten gegenüber diesen Materialien wesentlich höhere Benetzungsdrucke aufweisen als unpolare organische Flüssigkeiten. Der Benetzungsdruck ist derjenige Druck, den eine Flüssigkeit mindestens aufweisen muß, um in das Porensystem einer Membran eindringen zu können. Er liegt für Wasser gegenüber hydrophobem Polypropylen bei etwa 2,5 bis 3 bar, wenn die Verbindungsporen an ihrer jeweils engsten Stelle Durchmesser von etwa 0,4 µm aufweisen. Diesen Werten liegt folgende Bestimmungsmethode für den Benetzungsdruck zugrunde: Aus dem zu untersuchenden Membranmaterial wird ein Hohlfaden mit einer Wandstärke von ca. 100 - 200 µm hergestellt. Die Porenstruktur des Hohlfadens soll in etwa mit der der später zu verwendenden Membran übereinstimmen. Das Lumen des gereinigten und getrockneten Hohlfadens wird mit der zu untersuchenden Flüssigkeit gefüllt, deren Druck daraufhin langsam erhöht wird. Der Benetzungsdruck ist derjenige Druck, bei welchem der erste Flüssigkeitstropfen aus der
äußeren Hohlfadenoberfläche austritt, was leicht visuell
festgestellt werden kann. Da die wäßrige Flüssigkeit A
bei dem Verfahren einen Druck unterhalb desjenigen Benetzungsdruckes aufweist, den sie gegenüber den hydrophoben
Membranen  besitzt, wird ein Eindringen von Wasser sowie
von darin gelösten polaren Beimengungen in die Membran,
welche A von B getrennt hält, verhindert. Lediglich die
durch Komplexbildung in der Flüssigkeit B in Lösung gehenden
Metallionen vermögen in das Porensystem einzudringen.

Hydrophobe Membranen, welche geeignet sind, die Flüssigkeit
A von der Flüssigkeit B getrennt zu halten, bestehen z.B.
aus Polyolefinen oder halogenierten Polyolefinen. Als besonders geeignet haben sich Membranen aus Polypropylen wie
z.B. Accurel® (Fa. Enka AG, Wuppertal) oder aus Polyvinylidenfluorid (PVDF) erwiesen. Die Verwendung von Membranen aus
Polypropylen oder aus PVDF stellt eine bevorzugte Ausführungsform des Verfahrens dar.

Die Hydrophobie dieser Membranen allein würde nicht ausreichen, um das Eindringen von Wasser oder polaren,in
der wäßrigen Flüssigkeit A gelösten,Beimengungen in die Membran zu verhindern, wenn dieses Eindringen über eine Vermischung mit der Flüssigkeit B erfolgen würde. Aus diesem
Grund darf B mit der Flüssigkeit A nicht oder nicht nennenswert mischbar sein. Darunter ist zu verstehen, daß die
Löslichkeit von B in A sowie die Löslichkeit von A in B
nicht größer sein darf als etwa 0,5 bis 1 g/l.

Für die Membranen, durch welche die Flüssigkeit A von der
Flüssigkeit B getrennt gehalten wird, können mikroporöse
hydrophobe Materialien z.B. in Form von Flach- oder Spiralmembranen verwendet werden. Als besonders geeignet haben
sich jedoch Membranen in Form von Hohlfäden oder Rohren
erwiesen, da diese große Oberflächen bei relativ niedrigem
Volumen aufweisen. In einer bevorzugten Ausführungsform
des Verfahrens werden daher Membranen in Form von Hohlfäden oder
Rohren verwendet. Eine weiter bevorzugte Ausführungsform
des Verfahrens besteht darin, daß die Membranen
senkrecht angeordnet sind und die nichtwäßrige Flüssigkeit
B jeweils von oben nach unten an den Oberflächen der Membranen
parallel zu den Oberflächen vorbeigeführt wird. B kann dabei außen
an den Membranen oder durch deren Lumina geführt werden.
Durch das Führen jeweils von oben nach unten wird ein
Druckabfall der Flüssigkeit B längs der Hohlfäden oder Rohre
durch den hydrostatischen Druck ganz oder teilweise kompensiert. Diese Kompensierung eines sonst stattfindenden Druckabfalls führt zu einer Vergleichmäßigung des Metallionentransports über die gesamte Membranlänge.

Die Flüssigkeit B kann aus einem oder mehreren Komplexbildnern ohne weitere Zusätze bestehen. Eine bevorzugte
Ausführungsform besteht jedoch darin, daß B die Lösung
eines oder mehrer Komplexbildner(s) in einem unpolaren
Lösungsmittel oder Lösungsmittelgemisch ist. Da die
Diffusionsgeschwindigkeit der Metallionenkomplexe im
Porensystem von der Viskosität der Flüssigkeit B abhängt,
ist häufig Zusatz eines niedrigviskosen Lösungsmittels
vorteilhaft.

Nachdem die im Kreislauf geführte Flüssigkeit B die Metallionen aus der Flüssigkeit A aufgenommen hat und nunmehr
komplex gebunden enthält, wird sie der zweiten Überführungszone zugeführt. Hier erfolgt ein mechanisches Vermischen
der Flüssigkeit B mit der Flüssigkeit Z. Dabei werden die
Metallionen aus ihren Komplexen freigesetzt und an die
Flüssigkeit Z abgegeben. Damit die nachfolgende Abtrennung
von mit Metallionen angereicherter Flüssigkeit Z in wirtschaftlicher Weise durchführbar ist, darf die Flüssigkeit
B mit der Flüssigkeit Z nicht oder nicht nennenswert mischbar sein. Dies bedeutet, daß die Löslichkeit von B in Z
und umgekehrt nicht größer sein darf als etwa 0,5 bis 1 g/l.

Um große Grenz- bzw. Austauschfläche zwischen B und Z zu
schaffen, ist wegen der Nichtmischbarkeit der Flüssigkeiten
im ruhenden Zustand ein mechanisches Vermischen erforderlich.
Dies kann durch einen herkömmlichen Rührvorgang bewerkstelligt werden. Inniges Vermischen fördert dabei den
Metallionenaustausch. Die zeitliche Dauer dieses Mischvorgangs kann normalerweise relativ kurz sein und wird im
Einzelfall von den Volumina der Flüssigkeiten und anderen
Parametern bestimmt wie z.B. denen der chemischen Reaktion
Die zeitliche Dauer kann gegebenenfalls dadurch abgekürzt
werden, daß der Misch- bzw. Rührvorgang bei erhöhter Temperatur durchgeführt wird.

Nach dem Vermischen der Flüssigkeiten B und Z sind Metallionen in Z angereichert. Um diese zurückzugewinnen, wird
aus dem Gemisch wäßrige Phase wieder abgetrennt. Diese
abgetrennte wäßrige Phase ist in ihrer qualitativen Zusammensetzung mit der ursprünglich eingesetzten Flüssigkeit
Z identisch. Sie unterscheidet sich von ihr durch einen höheren Gehalt an Metallionen und im Fall des gekoppelten Counter-Transports durch einen niedrigeren Gehalt an Kationen X, also beispielsweise an Wasserstoffionen. Wie unten näher erläutert, kann der mittels Membranen durchgeführte Trennprozeß so erfolgen, daß B von Z vollständig getrennt wird, daß also nach dem Trennprozeß eine praktisch reine organische Phase (B) und eine praktisch reine wäßrige Phase (Z, jedoch mit erhöhtem Gehalt an Metallionen) erhalten wird. Es kann jedoch auch in einer Ausführungsform des Verfahrens unvollständig getrennt werden. Bei dieser Variante wird aus dem Gemisch aus B und Z nur ein Teil der mit Metallionen angereicherten reinen Phase Z abgetrennt, wobei die andere aus diesem Trennvorgang erhaltene Komponente immer noch ein Gemisch aus B und Z darstellt. Dieses Gemisch unterscheidet sich von dem bei dem Mischvorgang erhaltenen also dadurch, daß nunmehr sein Gehalt an wäßriger Phase niedriger ist. An Stelle der reinen Flüssigkeit B wird in diesem Fall somit ein Gemisch aus B und Z in die erste Überführungszone zurückgeführt, wo dieses Gemisch wieder Metallionen aus dem Anteil der Flüssigkeit B aufnimmt, der sich in den Poren der Membranen dieser Überführungszone befindet. Anschließend wird das Gemisch wieder der mechanischen Vermischung und dann dem Trennprozeß zugeführt, wo wieder ein Teil der mit Metallionen angereicherten wäßrigen Flüssigkeit Z abgetrennt wird. Die bei dieser Ausführungsform auftretende Abnahme des Gehalts an wäßriger Flüssigkeit kann kontinuierlich oder diskontinuierlich kompensiert werden. Dies geschieht z.B. dadurch, daß man eine noch mit Metallionen anzureichernde Menge an Z, das also die ursprüngliche Zusammensetzung von Z aufweist, beim Mischvorgang zudosiert. Es kann aber im Einzelfall auch chargenweise, das heißt ohne Zudosierung wäßriger Flüssigkeit zu dem Gemisch gearbeitet werden, wobei nach mehreren Kreisläufen des Gemisches die organische Flüssigkeit B und die wäßrige Flüssigkeit Z vollständig voneinander getrennt werden können.

Die hier beschriebene Variante der unvollständigen Trennung des Gemisches stellt eine bevorzugte Ausführungsform des Verfahrens dar. Da bei jedem Durchlaufen des Trennprozesses nur Teile der wäßrigen Flüssigkeit abgetrennt werden, läßt sich bei einem kontinuierlichen Verfahren einerseits der Trennprozeß gegenüber einem Prozeß mit vollständiger Trennung verkürzen, andererseits muß in der Stufe des mechanischen Vermischens weniger wäßrige Flüssigkeit Z neu zugemischt werden, wodurch sich auch diese Stufe abkürzen läßt.

Die hier beschriebene Ausführungsform der unvollständigen Trennung läßt sich dann durchführen, wenn für den Trennvorgang Membranen verwendet werden, die für die wäßrige Flüssigkeit Z mit den darin gelösten Metallionen permeabel sind, unter den Verfahrensbedingungen jedoch nicht permeabel für unpolare organische Flüssigkeiten. Für diese Ausführungsform des Verfahrens werden also Membranen mit hydrophiler innerer Oberfläche verwendet, die unten beschrieben werden.

Für die Ausführungsform der vollständigen Trennung der Flüssigkeiten B und Z eignen sich ebenfalls die oben angesprochenen Membranen mit hydrophiler innerer Oberfläche. Es können für diese Variante jedoch auch Membranen mit hydrophober innerer Oberfläche verwendet werden. Die Ausführungsform der vollständigen Trennung besteht darin, daß nach dem Vermischen der Flüssigkeiten B und Z diese wieder vollständig durch den mittels Membranen durchgeführten Trennprozeß voneinander getrennt werden. In diesem Fall

0179236

A3GW32100

wird die reine Flüssigkeit B wieder der ersten Überführungszone zugeführt, um dort Metallionen aufzunehmen. Anschließend
erfolgt wieder ein Vermischen mit Flüssigkeit Z.

Im Fall der Verwendung von Membranen mit hydrophober innerer
Oberfläche für den Trennprozeß ist die Membran für die
Flüssigkeit B permeabel, nicht dagegen für die mit Metallionen angereicherte Flüssigkeit Z. In diesem Fall permeiert
also die Flüssigkeit B durch die Membran und wird wieder dem
Kreislauf zugeführt. Diese Ausführungsform des Verfahrens, die
als Methode der vollständigen Trennung bezeichnet wird, kann
so durchgeführt werden, daß die Flüssigkeiten B und Z praktisch
vollständig voneinander getrennt werden, daß also praktisch
die gesamte Menge von B durch die Membran permeiert und
praktisch reine Flüssigkeit Z erhalten wird. Dies ist jedoch
wegen des Zeitaufwands weniger wirtschaftlich. Im Normalfall
wird man sich damit begnügen, nur die Hauptmenge von B aus
dem Gemisch mittels der hydrophoben Membran zu entfernen und
in den Kreislauf zurückzuführen, so daß die aus dem Gemisch
abgetrennte wäßrige Phase noch organische Beimengungen enthält, die dann ggf. mittels einer Nachreinigung entfernt und
ebenfalls in den Kreislauf zurückgeführt werden können. Trotz
der Tatsache, daß die wäßrige Phase noch organische Beimengungen enthalten kann, wird auch für diese Verfahrensweise
die Bezeichnung "vollständige Trennung" beibehalten.
Dies geschieht deshalb, um sie von der oben beschriebenen
Variante der "unvollständigen Trennung" zu unterscheiden, bei
der sich ein Gemisch aus den Flüssigkeiten B und Z im Kreislauf befindet und bei der die Membran für wäßrige Phase
permeabel ist.

Die beiden Möglichkeite n der Ausführungsform der Membranen,
nämlich entweder mit hydrophober oder mit hydrophiler innerer
Oberfläche werden nun im einzelnen vorgestellt.

Unter innerer Oberfläche werden hierbei die Zonen der
Membran verstanden, mit denen die Flüssigkeit, die durch
die Membran permeiert, in Berührung kommt. Dies sind demnach im Fall der oben beschriebenen mikroporösen Membranen,
in denen definierte Poren und gegebenenfalls Zellen vorliegen, die Oberflächen der Poren und Zellen. Im Fall der
unten abgehandelten Membranen, bei denen keine Öffnungen
oder Poren im eigentlichen  Sinn mehr vorliegen, kann
dagegen von einer Oberfläche von Poren nicht mehr gesprochen
werden. Hier wird die Charakteristik dieser "inneren
Oberfläche" durch das Material bestimmt, aus dem die Membranen bestehen.

Für das Verfahren geeignete Membranen mit hydrophober
innerer Oberfläche sind mikroporöse hydrophobe Membranen, wie
sie auch für die erste Überführungszone verwendet werden, um
dort die Flüssigkeit A von der Flüssigkeit B getrennt zu halten.

Die oben beschriebenen, für diesen Zweck bevorzugten, Ausführungsformen werden auch für die Trennung des Gemisches aus den Flüssigkeiten B und Z bevorzugt, sofern Membranen mit hydrophober innerer Oberfläche verwendet werden. Besonders bevorzugte Membranmaterialien sind hierbei wiederum Polypropylen und Polyvinylidenfluorid (PVDF). Wie bereits beschrieben, erfolgt im Fall der Anwendung dieser hydrophoben Membranen eine vollständige Trennung von B und Z. B permeiert hierbei durch die Membranen, während Z wegen des hohen Benetzungsdrucks von wäßrigen Flüssigkeiten gegen die hydrophoben Membranen nicht in die Membran eindringt.

Wenn Membranen mit hydrophiler innerer Oberfläche verwendet werden sollen, bei denen die Flüssigkeit Z permeiert, können ebenfalls mikroporöse Membranen aus hydrophoben Polymeren eingesetzt werden, wie sie oben beschrieben wurden. Nur muß vor der Verwendung dieser Membranen in diesem Fall ihre innere Oberfläche hydrophiliert werden. Diese Hydrophilierung kann z.B. durch Imprägnieren mit einer Lösung eines hydrophilen Materials geschehen. Eine besonders einfache Methode besteht daneben darin, daß man eine mikroporöse hydrophobe Membran, z.B. aus Polypropylen, mit einer das Membranmaterial gut benetzenden organischen wassermischbaren Flüssigkeit,z.B. Äthanol, tränkt und anschließend mit Wasser in Kontakt bringt. Durch die Mischbarkeit von Äthanol mit Wasser wird das Eindringen von Wasser in das Porensystem auch bei Normaldruck ermöglicht. Durch nachfolgendes Spülen mit Wasser läßt sich das Äthanol aus den Poren verdrängen. Eine so behandelte Membran, die bereits mit Wasser benetzt ist, ermöglicht das Eindringen weiterer Mengen Wasser, ohne daß
es, wie im Fall einer trockenen hydrophoben Membran, der
Überwindung eines hohen Benetzungsdruckes bedarf. So behandelte Membranen werden demnach im Sinne der vorliegenden
Anmeldung ebenfalls als Membranen mit hydrophiler innerer
Oberfläche bezeichnet.

Eine andere Ausführungsform von Membranen mit hydrophiler
innerer Oberfläche stellen Membranen dar, die aus einem
hydrophilen Material bestehen. In diesem Fall bedarf es
natürlich keines Hydrophilierungsprozesses mehr. Geeignete
Membranmaterialien hierfür sind z.B. regenerierte Cellulose, Polysulfon oder ein organisches Polymeres, an das
ionische Gruppen gebunden sind, wie Polystyrol, das durch
sulfonsaure Gruppen oder durch organische Ammoniumgruppen substituiert ist. Membranen aus diesen Materialien
sind für das Verfahren bevorzugt.

Eine weitere bevorzugte Ausführungsform hydrophiler Membranen besteht darin, daß Membranen verwendet werden,
bei denen der maximale Durchmesser der Porendurchgänge an
den äußeren Oberflächen und im Innern der Membranen 100 nm
beträgt. Da bei Verwendung von hydrophilen Membranen die
Permeation der organischen Flüssigkeit B unterbunden werden
muß, trägt in diesem Fall nicht nur die Natur des Membranmaterials, sondern auch dessen Struktur zur Erfüllung
dieser Forderung bei.

Durch die Einhaltung der genannten Obergrenze von 100 nm als Maximalwert für den Durchmesser der Porendurchgänge soll gewährleistet werden, daß jeder Porendurchgang an seiner engsten Stelle im Innern der Membran einen Durchmesser von nicht mehr als 100 nm aufweist und daß auch an der Oberfläche der Membran keine Öffnungen oder Poren mit größerem Durchmesser vorhanden sind.

Der maximale Durchmesser einer Pore an ihrer engsten Stelle im Innern der Membran läßt sich mit Hilfe der bekannten Blaspunktmethode ermitteln. Für die Ermittlung der Durchmesser von Poren oder Öffnungen an der Membranoberfläche eignen sich optische Methoden wie z.B. Elektronenmikroskopie.

Wie im Fall der Membranen, durch welche die Flüssigkeit A von der Flüssigkeit B getrennt gehalten wird, sind auch für den Trennprozeß Membranen in Form von Hohlfäden oder Rohren bevorzugt, da sie ein sehr günstiges Verhältnis von Oberfläche zu Volumen aufweisen.

Gegebenenfalls kann es von Vorteil sein, die nach dem Trennprozeß erhaltene wäßrige Flüssigkeit Z bzw. die erhaltenen Teilmengen an Z einer weiteren Trennoperation zu unterziehen, um noch vorhandene Reste der Flüssigkeit B oder Teilen davon zu entfernen. Damit kann man ggf. zu einer höheren Reinheit der mit Metallionen angereicherten Flüssigkeit Z gelangen, aus der dann die Metalle in reiner Form isoliert werden können. Diese Nachreinigung bietet
sich als weiterer Verfahrensschritt auch für den Fall
der Abwasserreinigung an. Diese nachfolgende Trennoperation kann z.B. ebenfalls mittels Membranen oder auch
mittels einer herkömmlichen Abscheidevorrichtung durchgeführt werden. Die hierbei erhaltenen Anteile der Flüssigkeit B werden zweckmäßigerweise in den Kreislauf zurückgeführt.

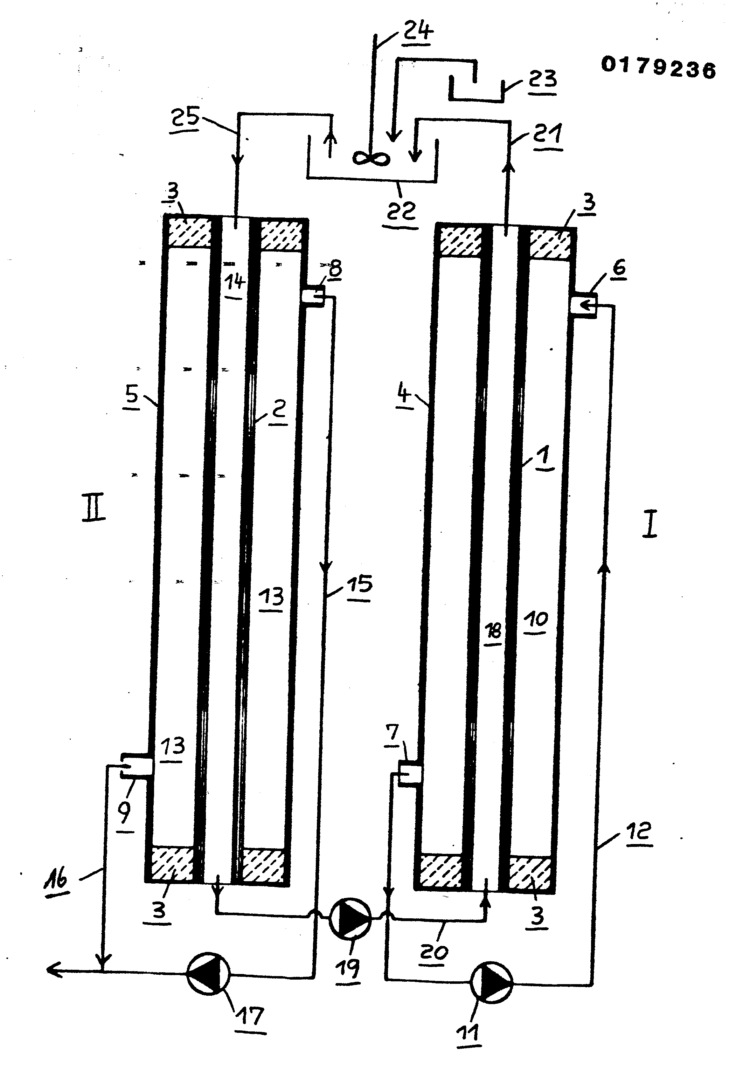

Eine Ausführungsform des Verfahrens ist schematisch in
vereinfachter Darstellung in Abbildung 1 wiedergegeben.
Dargestellt ist hier eine Ausführungsform, bei der für den
Trennprozeß eine Membran mit hydrophiler innerer Oberfläche
verwendet wird, die also die Permeation der wäßrigen
Flüssigkeit Z zuläßt.

Zur besseren Veranschaulichung ist für die erste Überführungszone I sowie für den Verfahrensabschnitt des Trennprozesses II nur je eine Membran in Form eines Hohlfadens
1 bzw. 2 dargestellt. Die Hohlfäden sind mittels einer Einbettmasse 3 in die Gehäuse 4 bzw. 5 eingebettet. Diese
Einbettmasse 3 kann beispielsweise aus Polyurethan bestehen.

An den Gehäusen 4 und 5 sind Anschlüsse 6, 7, 8, 9 für Flüssigkeitszu- bzw. -ablauf angebracht. Im Außenraum 10 der Hohlfäden der ersten Überführungszone I befindet sich die wäßrige Flüssigkeit A, die über die Anschlüsse 6 und 7 mittels der Pumpe 11 entlang des durch 12 dargestellten Weges im Kreislauf geführt werden kann.

Im Außenraum 13 der Hohlfäden der zweiten Überführungszone II befindet sich die mit Metallionen angereicherte Flüssigkeit Z oder Teile davon, je nachdem ob nach der Ausführungsform der vollständigen Trennung oder der unvollständigen Trennung gearbeitet wird.
Diese Anteile von Z stammen aus dem in das Lumen 14 der Hohlfäden geführten Gemisch aus B und Z. Diese Anteile von Z, die mittels der Membran abgetrennt wurden, verlassen das Gehäuse 5 bei den Anschlüssen 8 und/oder 9 und folgen dem durch die Linien 15 bzw. 16 angegebenen Weg. Sie können anschließend über eine Pumpe 17 einer (nicht dargestellten) Vorrichtung zwecks Nachreinigung zugeführt oder anderweitig weiterverarbeitet werden.

Je nachdem, ob nach der Methode der vollständigen oder der unvollständigen Trennung gearbeitet wird, tritt die im Kreislauf geführte Flüssigkeit B oder deren Gemisch mit Z in das Lumen 18 der Hohlfäden der ersten Überführungszone (I) ein. Sie wird dabei durch die Pumpe 19 entlang des Weges gefördert, der durch die Linie 20 dargestellt ist.

Nach dem Verlassen der ersten Überführungszone folgt die mit Metallionen beladene Flüssigkeit B bzw. das Gemisch dem durch die Linie 21 angegebenen Weg und tritt in eine Mischvorrichtung 22 ein. In dieser Mischvorrichtung wird Flüssigkeit Z aus einem Reservoir 23 zudosiert. Zur innigen Vermischung dient ein Rührer 24. Das Gemisch folgt dann dem durch die Linie 25 angegebenen Weg und wird durch eine (nicht dargestellte) Pumpe in das Lumen 14 der Hohlfäden 2 geführt, die dem Trennprozeß dienen.

An den Gehäusen, der Mischvorrichtung, sowie den Flüssigkeitsleitungen können (nicht dargestellte) Heizvorrichtungen angebracht sein.

Das erfindungsgemäße Verfahren weist gegenüber bekannten Verfahren folgende Vorteile auf:

1. Durch die Verwendung mikroporöser hydrophober Membranen zwischen den Flüssigkeiten A und B wird verhindert, daß unerwünschte Beimenungen in die Flüssigkeit B gelangen. Die Metalle liegen bereits in B und somit auch in der Flüssigkeit Z in hoher Reinheit vor.

2. Die Verwendung der erwähnten Membranen erfordert keine aufwendigen Schritte der Trennung von A und B, wie sie bei Verfahren ohne Membranen erforderlich sind.

3. Wegen des Führens der Flüssigkeit B im Kreislauf tritt B in die erste Überführungszone, wo es Metallionen aus A aufnimmt, niedrig mit Metallionen beladen ein. So kann ein hoher Konzentrationsgradient zwischen A und B, der zu hohen Flußwerten führt, aufrechterhalten werden. Dies gilt in noch höherem Maße dann, wenn das bevorzugte Verfahren angewandt wird, bei dem A im Gegenstrom zu B geführt wird.

4. Mikroporöse Membranen mit verzellter Porenstruktur und großen Porenvolumina, wie sie bevorzugt verwendet werden, um die Flüssigkeit A von der Flüssigkeit B getrennt zu halten, können eine größere Menge an Metallionen in das Porensystem aufnehmen als Membranen ohne Zellen und mit kleineren Porenvolumina. Dadurch lassen sich höhere Werte für den Fluß am Metallionen erzielen.

5. Die Verluste an Komplexbildner im Porensystem, die durch eine gewisse Löslichkeit des Komplexbildners in der wäßrigen Flüssigkeit A auftreten können, werden durch die im Kreislauf geführte Flüssigkeit B ständig ausgeglichen, da diese in die Poren der verwendeten mikroporösen hydrophoben Membranen eindringen kann.

6. Das Führen der Flüssigkeit B im Kreislauf ermöglicht die Hintereinanderschaltung einer größeren Anzahl von Überführungszonen, so daß in ein und demselben System eine größere Menge an Metallionen von A nach Z überführt werden kann.

7. Das innige Vermischen der Flüssigkeiten B und Z erhöht den Metallionenfluß gegenüber Verfahren, bei denen eine solche Vermischung nicht stattfindet.

8. Die Trennung des Gemisches aus B und Z mittels Membranen ist weniger aufwendig als Trennoperationen über Abscheidung, die oft mehrfach durchgeführt werden müssen. Die Trennung über Membranen erlaubt es, das gesamte Verfahren kontinuierlich durchzuführen: das nach dem Trennprozeß erhaltene Gemisch aus B und Z bzw. die erhaltene reine Flüssigkeit Z wird im Kreislauf wieder der ersten Überführungszone zugeführt.

Die Erfindung wird nunmehr durch Beispiele veranschaulicht.

Beispiel 1:

Als wäßrige Flüssigkeit A diente eine wäßrige Lösung von Kupfer-II-sulfat mit einem pH-Wert von 3,5. Die zu überführenden Metallionen waren somit $Cu^{++}$-Ionen. Der pH-Wert der Lösung wurde während des Verfahrens durch Zugabe von wäßriger NaOH-Lösung annähernd konstant gehalten. 6,6 l dieser wäßrigen Lösung A wurden kontinuierlich mit einer Rate von 250 l/Stunde im Kreislauf gepumpt und durchströmten während dieses Kreislaufs die Lumina der mikroporösen hydrophoben Hohlfäden, die in der ersten Überführungszone als Membranen verwendet wurden. Die im Kreislauf gepumpte wäßrige Flüssigkeit A enthielt während des Verfahrens 160 ppm Cu. Dieser Wert wurde zu Beginn des Prozesses eingestellt und während des Verfahrens konstant gehalten. Die konstante Beibehaltung des Volumens von 6,6 l einer Konzentration von 160 ppm erfolgte einerseits durch kontinuierliche Zugabe von wäßriger Lösung, die 2 000 ppm Cu enthielt und kontinuierlicher Entnahme des gleichen Volumens wäßriger Lösung mit 160 ppm Cu aus dem Kreislauf. Um Volumen und Konzentration der im Kreislauf geführten wäßrigen Lösung A beizubehalten, waren bei diesem Beispiel eine kontinuierliche Zuführung von 2 000 ppm Cu-enthaltender Lösung mit 880 ml/Stunde und eine kontinuierliche Entnahme von 160 ppm Cu enthaltender Lösung mit ebenfalls 880 ml/Stunde erforderlich.

Die im Kreislauf geführte wäßrige Lösung trat am oberen
Ende der senkrecht angeordneten Hohlfadenmembranen in deren
Lumina bei einem Druck von 1,8 bar ein und am unteren Ende
der Hohlfäden bei einem Druck von 1,2 bar aus. Anschließend
wurde ihr Druck im Kreislauf wieder auf 1,8 bar erhöht.

Als Membranen für diese erste Überführungszone wurden
800 Hohlfäden aus mikroporösem Polypropylen verwendet,
die in Form eines Stoffaustauschmoduls vorlagen. Der Innendurchmesser jedes Hohlfadens betrug 0,3 mm, der Außendurchmesser 0,6 mm, was einer Wandstärke von 150 µm entspricht.
Der maximale Porendurchmesser betrug 0,57 µm, gemessen mit
der Blaspunktmethode, die Länge der Hohlfäden 216 mm, die
gesamte Austauschfläche (= innere Oberfläche der Hohlfäden)
0,163 m$^2$. Im Außenraum der Hohlfäden wurde parallel zu den
Oberflächen der Hohlfäden und von unten nach oben ein
Gemisch aus organischer Phase B und wäßriger Flüssigkeit Z
im Kreislauf vorbeigeführt. Dieses Gemisch enthielt 90
Gew.-% organische Phase B und 10 Gew.-% wäßrige Flüssigkeit
Z. Das im Kreislauf geführte Volumen betrug 6,6 l, die mit
120 l/Stunde umgepumpt wurden. Die Flüssigkeit B war eine
10 Gew.-%ige Lösung von LIX 63/70 in Kerosin. LIX 63/70
ist eine von der Firma Henkel Corp., Kankakee, Illinois,
USA, beziehbare Mischung zweier Hydroxyoxime. Die Flüssigkeit
Z, die im Gemisch mit B an den Hohlfäden vorbeigeführt wurde,
war eine 13 000 ppm Cu enthaltende schwefelsaure Lösung
von Kupfer-II-sulfat mit einem pH-Wert von 0,64.
Das im Kreislauf geführte Gemisch aus B und Z wurde nach
dem Verlassen des Moduls der ersten Überführungszone einem
Behälter zugeführt, in dem kontinuierlich frische wäßrige
Schwefelsäure eines pH-Werts von 0,55 mit einer Rate von
100 ml/Stunde zudosiert wurde.

In dem Behälter erfolgte mittels Rühren ein mechanisches
Vermischen von B und Z.

Das Zu- und Abführen des Gemisches zu bzw. aus dem Behälter
erfolgte kontinuierlich.

Nach dem Vermischen wurde der Druck des im Kreislauf geführten Gemisches auf 2,1 bar erhöht. Anschließend trat
das Gemisch in einen Modul ein, der eine Flachmembran aus
mit ionischen Gruppen modifiziertem Polystyrol enthielt
(Polyelektrolytmembran Amicon UM 10 der Firma Amicon)
mit einem vom Hersteller angegebenen "Poren"-radius von
1,5 nm). Dieser Modul, der die zweite Überführungszone
darstellt, diente dazu, aus dem Gemisch der Flüssigkeiten
B und Z einen Teil der wäßrigen Phase Z abzutrennen. Z permeiert hierbei durch die hydrophile Membran. Die Flachmembran besaß die Form einer Scheibe mit einem Durchmesser
von 76 mm.

Durch den nach dem cross-flow-Prinzip durchgeführten Trennvorgang wurden kontinuierlich 100 ml/Stunde wäßrige Phase
abgetrennt. Wegen der Zuführung wäßriger Lösung im o.a.
Mischbehälter blieben somit das Volumen des im Kreislauf
geführten Gemisches und auch das Verhältnis 90% B/10% Z
konstant.

Nach dem Verlassen der zweiten Überführungszone wurde das
Gemisch aus B und Z auf einen Druck von 1 bar gebracht,
bevor es wieder der ersten Überführungszone zugeführt wurde.

Unter diesen Bedingungen ergab sich ein Fluß an Cu-Ionen
zwischen den Flüssigkeiten A und B/Z von 15,7 $\mu g/cm^2 \cdot min$,
wobei sich die Flächenangabe $cm^2$ auf die Gesamtaustauschfläche der Polypropylen-Hohlfäden bezieht.

**0179236**

**Beispiel 2:**

Gegenüber Beispiel 1 wurden folgende Änderungen vorgenommen:

Die frische wäßrige Lösung, die der im Kreislauf geführten
wäßrigen Lösung A zudosiert wurde, enthielt 2 200 ppm Cu.
Die Rate dieser Zudosierung und die Rate der Entnahme von
A aus dem Kreislauf betrug 875 ml/Stunde.

Das Gemisch aus B und Z enthielt 65 Gew.-% B und 35 Gew.-%
Z. Das im Gemisch vorhandene Z war eine schwefelsaure
Lösung mit 8100 ppm Cu und einem pH-Wert von 0,53.
Im Mischbehälter wurde wäßrige Schwefelsäurelösung mit
168 ml/Stunde zugegeben, in der zweiten Überführungszone
168 ml/Stunde an wäßriger Flüssigkeit Z abgetrennt.

Die Membran der zweiten Überführungszone, in der die Abtrennung eines Teils von Z erfolgte, war eine Flachmembran
auf Polysulfonbasis (Amicon PM 10 der Firma Amicon mit
einem vom Hersteller angegebenen "Poren"-radius von 1,9 nm).

Unter diesen Bedingungen wurde für den Übergang der Cu-
Ionen von A nach B/Z anfänglich ein Wert von 17 $\mu g/cm^2 \cdot$ min
    erhalten. Dieser Wert fiel jedoch während des Verfahrens
etwas ab.

**Beispiel 3:**

Gegenüber Beispiel 1 wurden folgende Änderungen vorgenommen:

Die zur im Kreislauf geführten Flüssigkeit A kontinuierlich
zudosierte und aus dem Kreislauf entnommene Menge betrugen
1155 ml/Stunde. Die zugeführte Lösung enthielt 1880 ppm Cu.

Die im Kreislauf geführte Flüssigkeit A enthielt 560 ppm Cu.

Das im Kreislauf geführte Gemisch aus B und Z enthielt
65 Gew.-% B und 35 Gew.-% Z. Das im Gemisch vorhandene Z
enthielt 16 500 ppm Cu und wies einen pH-Wert von 1,1 auf.

Die im Mischbehälter zudosierte wäßrige Schwefelsäure besaß
einen pH-Wert von 0,69 und wurde mit 100,4 ml/Stunde zudosiert. In der zweiten Überführungszone wurden mittels
Membranen ebenfalls etwa 100 ml/Stunde an wäßriger Lösung
Z abgetrennt.

Als Membranen in der zweiten Überführungszone, die der Abtrennung von wäßriger Phase Z aus dem Gemisch dienten, wurden
Hohlfäden aus mikroporösem Polypropylen verwendet.

Die inneren Oberflächen der Hohlfäden waren durch die oben
beschriebene Methode des Tränkens mit Äthanol vorher hydrophiliert worden. Es wurden sieben Hohlfäden mit einem inneren
Durchmesser von 1,8 mm, einem äußeren Durchmesser von 2,6 mm,
einem Porenvolumen von 75% und einem maximalen Porendurchmesser von 0,55 µm verwendet.

Es wurde ein Fluß an Cu-Ionen von 16,3 $\mu g/cm^2 \cdot min$ ermittelt.

In allen drei Beispielen wies die abgetrennte wäßrige Phase
Z einen Gehalt an Kerosin von weniger als 1% auf.

Patentansprüche

1. Verfahren zum Überführen von Metallionen aus einer wäßrigen Flüssigkeit A in eine nichtwäßrige Flüssigkeit B und von B in eine wäßrige Flüssigkeit Z, wobei B in einer ersten Überführungszone die Metallionen aus A aufnimmt und dann zu einer zweiten Überführungszone geführt wird, wo es die Metallionen an Z abgibt, wobei ferner die Flüssigkeit B mit den Flüssigkeiten A und Z nicht oder nicht nennenswert mischbar ist, mindestens einen Komplexbildner für die Metallionen enthält und ein Lösungsmittel für die komplexierten Metallionen darstellt, dadurch gekennzeichnet, daß man die Flüssigkeit B kontinuierlich im Kreislauf durch die Überführungszonen führt, wobei die Flüssigkeit A von der im Kreislauf geführten Flüssigkeit B durch eine oder mehrere mikroporöse hydrophobe Membranen getrennt gehalten wird, in deren Poren sich ein Teil der Flüssigkeit B befindet, und daß in der zweiten Überführungszone die Flüssigkeit B mit der Flüssigkeit Z mechanisch vermischt wird und daß aus diesem Gemisch in der zweiten Überführungszone durch einen mittels Membranen durchgeführten Trennprozeß wäßrige Phase wieder abgetrennt wird.

0179236

2. Verfahren nach Anspruch 1, dadurch gekennzeichnet, daß man die Flüssigkeit B im Kreislauf durch mehr als zwei Überführungszonen führt, wobei deren Gesamtzahl eine gerade Zahl ist und wobei B abwechselnd in einer Überführungszone Metallionen aus der Flüssigkeit A aufnimmt und in der darauffolgenden an die Flüssigkeit Z abgibt und umgekehrt, wobei die Flüssigkeit B in den entsprechenden Überführungszonen jeweils mit der Flüssigkeit Z mechanisch vermischt und aus diesem Gemisch jeweils durch einen mittels Membranen durchgeführten Trennprozeß wäßrige Phase wieder abgetrennt wird.

3. Verfahren nach Anspruch 1 und 2, dadurch gekennzeichnet, daß gekoppelt mit dem Überführen der Metallionen ein Überführen von Kationen X, die mit den Metallionen nicht identisch sind, in Gegenrichtung zur Überführung der Metallionen durchgeführt wird, wobei die Kationen X in der Flüssigkeit B ebenfalls in Form von gelösten Komplexen vorliegen.

4. Verfahren nach Anspruch 3, dadurch gekennzeichnet, daß die Konzentration $(X_Z)$ von X in Z größer ist als die Konzentration $(X_A)$ von X in A und daß $\dfrac{X_Z}{X_A}$ mindestens zu Beginn des Verfahrens größer ist als $\dfrac{M_Z}{M_A} \cdot \dfrac{n_M}{n_X}$, wobei $M_A$ und $M_Z$ die Konzentration der Metallionen in den Flüssigkeiten A bzw. Z und wobei $n_M$ und $n_X$ die Wertigkeiten der Metallionen bzw. der Kationen X bedeuten.

A3GW32100

5. Verfahren nach Anspruch 4, dadurch gekennzeichnet, daß $M_Z$ größer ist als $M_A$.

6. Verfahren nach Anspruch 3 bis 5, dadurch gekennzeichnet, daß die Kationen X Wasserstoffionen sind.

7. Verfahren nach Anspruch 6, dadurch gekennzeichnet, daß in der Flüssigkeit A durch Neutralisieren der übergeführten Wasserstoffionen ein weitgehend konstanter pH-Wert aufrechterhalten wird.

8. Verfahren nach Anspruch 1 bis 7, dadurch gekennzeichnet, daß die Flüssigkeit A im Kreislauf geführt wird, wobei sie in Gegenrichtung zur Strömungsrichtung der Flüssigkeit B an den Membranoberflächen geführt wird.

9. Verfahren nach Anspruch 1 bis 8, dadurch gekennzeichnet, daß für das Getrennthalten der Flüssigkeit A von der Flüssigkeit B und/oder für den Trennprozeß Membranen in Form von Hohlfäden oder Rohren verwendet werden.

10. Verfahren nach Anspruch 1 bis 9, dadurch gekennzeichnet, daß daß in der bzw. den Überführungszone(n), in der bzw. denen B Metallionen aus A aufnimmt, die Membranen senkrecht angeordnet sind und die Flüssigkeit B jeweils von oben nach unten an ihren Oberflächen parallel zu den Oberflächen vorbeigeführt wird.

11. Verfahren nach Anspruch 1 bis 10, dadurch gekennzeichnet, daß die Membranen, durch welche die Flüssigkeit A von der Flüssigkeit B getrennt gehalten wird, ein verzelltes Porensystem aufweisen, das aus Zellen und Verbindungsporen zwischen den Zellen besteht.

12. Verfahren nach Anspruch 1 bis 11, dadurch gekennzeichnet,
daß das Porenvolumen der Membranen, durch welche die
Flüssigkeit A von der Flüssigkeit B getrennt gehalten wird,
65 - 85 % ihres Gesamtvolumens beträgt.

13. Verfahren nach Anspruch 12, dadurch gekennzeichnet,
daß das Porenvolumen der Membranen, durch welche die
Flüssigkeit A von der Flüssigkeit B getrennt gehalten wird,
70 - 80% ihres Gesamtvolumens beträgt.

14. Verfahren nach Anspruch 1 bis 13, dadurch gekennzeichnet,
daß die Wandstärke der Membranen, durch welche die Flüssigkeit A von der Flüssigkeit B getrennt gehalten wird,
etwa 50 bis 400 μm beträgt.

15. Verfahren nach Anspruch 14, dadurch gekennzeichnet,
daß die Wandstärke der Membranen, durch welche die Flüssigkeit A von der Flüssigkeit B getrennt gehalten wird, etwa
50 bis 300 μm beträgt.

16. Verfahren nach Anspruch 1 bis 15, dadurch gekennzeichnet,
daß die Membranen, durch welche die Flüssigkeit A von der
Flüssigkeit B getrennt gehalten wird, aus Polypropylen
bestehen.

17. Verfahren nach Anspruch 1 bis 15, dadurch gekennzeichnet,
daß die Membranen, durch welche die Flüssigkeit A von der
Flüssigkeit B getrennt gehalten wird, aus Polyvinylidenfluorid bestehen.

0179236

18. Verfahren nach Anspruch 1 bis 17, dadurch gekennzeichnet, daß die für den Trennprozeß verwendeten Membranen aus einem mikroporösen, hydrophoben Polymeren bestehen.

19. Verfahren nach Anspruch 18, dadurch gekennzeichnet, daß die für den Trennprozeß verwendeten Membranen aus einem Material gemäß einem oder mehreren der Ansprüche 11 bis 17 bestehen.

20. Verfahren nach Anspruch 1 bis 17, dadurch gekennzeichnet, daß die für den Trennprozeß verwendeten Membranen eine hydrophile innere Oberfläche aufweisen.

21. Verfahren nach Anspruch 20, dadurch gekennzeichnet, daß die Membranen aus einem Grundmaterial nach den Ansprüchen 18 oder 19 bestehen, dessen innere Oberfläche hydrophiliert ist.

22. Verfahren nach Anspruch 20, dadurch gekennzeichnet, daß die Membranen aus einem hydrophilen Material bestehen.

23. Verfahren nach Anspruch 22, dadurch gekennzeichnet, daß das hydrophile Material aus regenerierter Cellulose besteht.

24. Verfahren nach Anspruch 22, dadurch gekennzeichnet, daß das hydrophile Material aus Polysulfon besteht.

25. Verfahren nach Anspruch 22, dadurch gekennzeichnet, daß das Material aus einem organischen Polymeren besteht, an das ionische Gruppen gebunden sind.

0179236

26. Verfahren nach Anspruch 25, dadurch gekennzeichnet, daß das organische Polymere Polystyrol ist.

27. Verfahren nach Anspruch 22 bis 26, dadurch gekennzeichnet, daß der maximale Durchmesser der Porendurchgänge der Membranen an den äußeren Oberflächen und im Innern der Membranen 100 nm beträgt.

28. Verfahren nach Anspruch 1 bis 27, dadurch gekennzeichnet, daß die Flüssigkeit B die Lösung eines oder mehrerer Komplexbildner in einem unpolaren Lösungsmittel oder Lösungsmittelgemisch ist.

29. Verfahren nach Anspruch 1 bis 28, dadurch gekennzeichnet, daß als Komplexbildner Kronenäther verwendet werden.

30. Verfahren nach Anspruch 3 bis 28, dadurch gekennzeichnet, daß als Komplexbildner chelatbildende Hydroxyoxime verwendet werden.

31. Verfahren nach Anspruch 20 bis 30, dadurch gekennzeichnet, daß an die Stelle der im Kreislauf geführten Flüssigkeit B ein Gemisch aus den Flüsigkeiten B und Z tritt, daß im Kreislauf mittels des Trennprozesses dem Gemisch kontinuierlich oder diskontinuierlich ein Teil der mit Metallionen angereicherten Flüssigkeit Z entzogen wird und daß diese Abtrennung eines Teils der Flüssigkeit Z gegebenenfalls durch Zudosierung von nicht mit Metallionen angereicherter Flüssigkeit Z ganz oder teilweise ausgeglichen wird.

32. Verfahren nach Anspruch 1 bis 31, dadurch gekennzeichnet, daß der nach dem Trennprozeß erhaltene Anteil der Flüssigkeit Z durch eine weitere Trennoperation von gegebenenfalls noch enthaltenen Anteilen der Flüssigkeit B getrennt wird und daß die hierbei erhaltenen Anteile an B in den Kreislauf zurückgeführt werden.